# EUROPÄISCHE PATENTSCHRIFT

(11) **EP 1 963 776 B1**
(45) Veröffentlichungstag und Bekanntmachung des Hinweises auf die Patenterteilung: **24.11.2010**
(21) Anmeldenummer: 07785585.6
(22) Anmeldetag: 30.06.2007
(51) Int. Cl.: F41H 7/04

(54) **GEGEN ÄUSSERE EXPLOSIONSEINWIRKUNG GESCHÜTZTES, INSBESONDERE MILITÄRISCHES FAHRZEUG**
VEHICLE, PARTICULARLY MILITARY VEHICLE, PROTECTED AGAINST THE EFFECT OF AN EXTERNAL EXPLOSION
VÉHICULE, NOTAMMENT VÉHICULE MILITAIRE, PROTÉGÉ CONTRE DES EFFETS D'EXPLOSIONS EXTERNES

(30) Priorität: 05.07.2006 DE 202006010399 U
(43) Veröffentlichungstag der Anmeldung: 03.09.2008
(73) Patentinhaber: Krauss-Maffei Wegmann GmbH & Co. KG, 80997 München (DE)
(72) Erfinder: SCHLEGL, Eugen, 82194 Gröbenzell (DE)
(74) Vertreter: Feder, Wolf-Dietrich
(86) Internationale Anmeldenummer: PCT/DE2007/001167
(87) Internationale Veröffentlichungsnummer: WO 2008/003296

(56) Entgegenhaltungen:
- EP-A- 1 832 499
- US-A- 5 663 520
- US-B1- 6 363 830

## Beschreibung

Die Erfindung betrifft ein gegen äußere Explosionseinwirkung geschütztes, insbesondere militärisches Fahrzeug mit den Merkmalen aus dem Oberbegriff des Patentanspruchs 1. Ein derartiges Fahrzeug ist an sich bekannt, zum Beispiel aus der US 5663520 A.

Wie sich bei Kampfeinsätzen, oder auch bei Einsätzen in terroristisch bedrohten Gebieten gezeigt hat, wird bei militärischen Fahrzeugen der Schutz gegen seitlich neben dem Fahrzeug explodierende Sprengbomben immer wichtiger. Eine Schwachstelle bei der Aufnahme des durch die Explosion erzeugten Drucks stellen naturgemäß die Türen beziehungsweise die Türausschnitte des Fahrzeugs dar. So kann es bei einer seitlich neben dem Fahrzeug auftretenden Explosion geschehen, dass sich die Tür und der Türausschnitt so weit durchbiegen, dass die Tür durch den Türausschnitt gedrückt wird. Es ist bekannt, Tür und Türausschnitt zu verstärken, um die Durchbiegung zu reduzieren. So ist es, wie weiter unten genauer erläutert, beispielsweise bekannt, an der Innenseite der Seitenwand des Fahrzeugs parallel und in unmittelbarer Nähe zu der das Türschloß enthaltenden, hinteren Kante des Türausschnitts, eine nach innen ragende Verstärkungsrippe anzuordnen.

Nun werden bei bekannten Fahrzeugen diese hinteren Kanten des Türausschnitts in der Regel vertikal verlaufend angeordnet. Da andererseits der Türausschnitt nicht größer sein soll, als es zum Aus- und Einsteigen notwendig ist, hat es sich herausgestellt, dass bei Anordnung der nach innen ragenden Verstärkungsrippe in unmittelbarer Nähe und parallel zur hinteren Kante des Türausschnitts die Schulter des im Bereich des Türausschnitts sitzenden Besatzungsmitgliedes im Bereich dieser Verstärkungsrippe liegt und nur einen geringen Abstand von ihr besitzt. Die sich bei einer Explosion einbeulende Seitenwand verformt sich zwar in Folge der Verstärkungsrippe weniger, sie kann jedoch nach kürzerem Verformungsweg auf die Schulter der dahinter sitzenden Person aufschlagen. In Folge der hohen Verformungsgeschwindigkeit treten schwerste bis tödliche Verletzungen auf.

Der Erfindung liegt die Aufgabe zugrunde, ein Fahrzeug mit den im Oberbegriff des Patentanspruchs 1 angegebenen Merkmalen so auszubilden, dass die Gefahr eines Aufschlagens der Verstärkungsrippe auf die Schulter des Besatzungsmitgliedes bei einer Explosion neben dem Fahrzeug vermieden wird.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, die hintere Kante des Türausschnitts parallel zur Rückenlehne des Fahrersitzes zu führen, und zwar so, dass sie unmittelbar neben der Rückenlehne, oder hinter der Rückenlehne, verläuft, also von der Rückenauflagefläche auf der Rückenlehne nach hinten versetzt ist. Hierdurch wird zweierlei erreicht:
1. Die Verstärkungsrippe der Seitenwand schlägt bei einer Einbeulung durch Explosion nicht mehr auf die Schulter beziehungsweise den Oberarm des Besatzungsmitgliedes auf, sondern auf die Rückenlehne des Sitzes. Hierdurch werden die Auswirkungen auf die Person selbst zumindest gemindert oder ganz vermieden.
2. Da die Körperbreite bei der Schulter beziehungsweise dem Oberarm zumindest bei größeren Personen größer ist als die Breite der Rückenlehne, ist der Abstand zwischen der Verstärkungsrippe und der Rückenlehne des Sitzes größer als der Abstand zur Schulter. Die sich einbeulende Seitenwand schlägt dadurch mit der Verstärkungsrippe gar nicht oder nach einem grösseren Weg und damit mit reduzierter Geschwindigkeit auf. Eine geringere Aufschlagsgeschwindigkeit reduziert die Verletzungswahrscheinlichkeit. Im Folgenden werden anhand der beigefügte Zeichnungen die Aufgabenstellung und ein Ausführungsbeispiel für die Erfindung näher erläutert.

In den Zeichnungen zeigen:
Fig. 1 in Seitenansicht das Vorderteil eines militärischen Fahrzeugs mit einer neben dem Fahrersitz in der Seitenwand des Fahrzeuggehäuses angeordneten Tür;
Fig. 2 A in einer stark schematisierten Seitenansicht den Türausschnitt eines militärischen Fahrzeugs gemäß dem Stand der Technik;
Fig. 2 B einen horizontalen Teilschnitt durch das Fahrzeuggehäuse im Bereich des Fahrersitzes bei dem militärischen Fahrzeug gemäß Fig. 2 A nach dem Stand der Technik;
Fig. 3 A in einer Darstellung analog Fig. 2 A den Türausschnitt bei einem militärischen Fahrzeug nach der Erfindung;
Fig. 3 B in einer Darstellung analog Fig. 2 B den horizontalen Teilschnitt im Bereich des Fahrersitzes bei einem Fahrzeug gemäß der Erfindung nach Fig. 3 A.

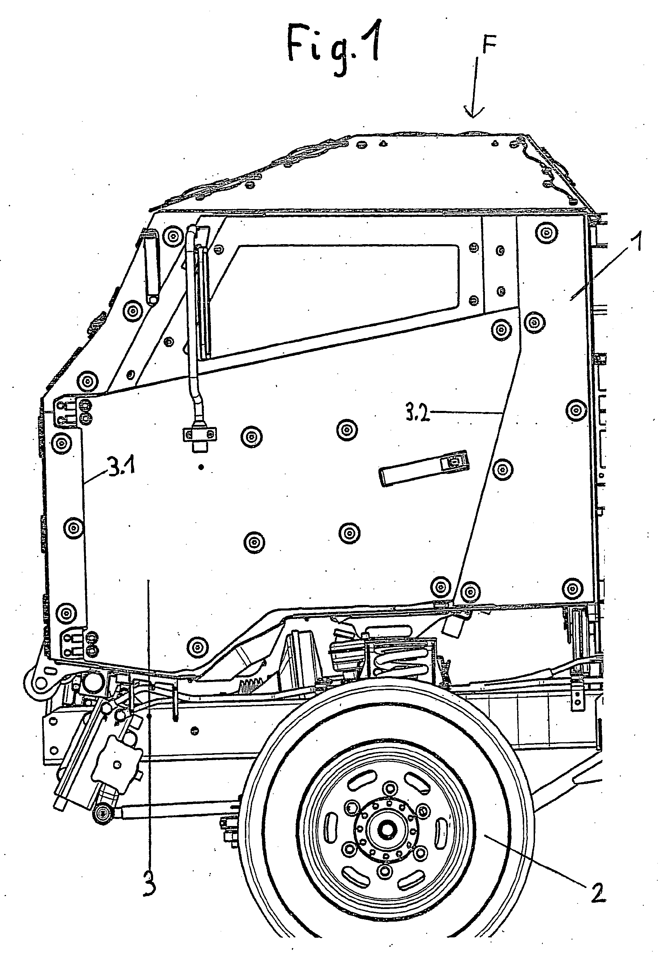

Fig. 1 zeigt das Fahrerhaus F eines im übrigen nicht dargestellten militärischen Fahrzeugs mit einem Fahrzeuggehäuse, das auf einem Fahrwerk 2 angeordnet ist. In der Seitenwand 1 des Fahrerhauses F ist eine Ein-/Ausstiegstür 3 angeordnet, die in einem Türausschnitt der Seitenwand 1 mit ihrer vorderen, der Fahrtrichtung zugewandten, Kante 3.1 an der vorderen Kante des Türausschnitts angelenkt ist und mit ihrer hinteren, von der Fahrtrichtung abgewandten, Kante 3.2 der das Türschloß enthaltenden hinteren Kante des Türausschnitts zugewandt ist.

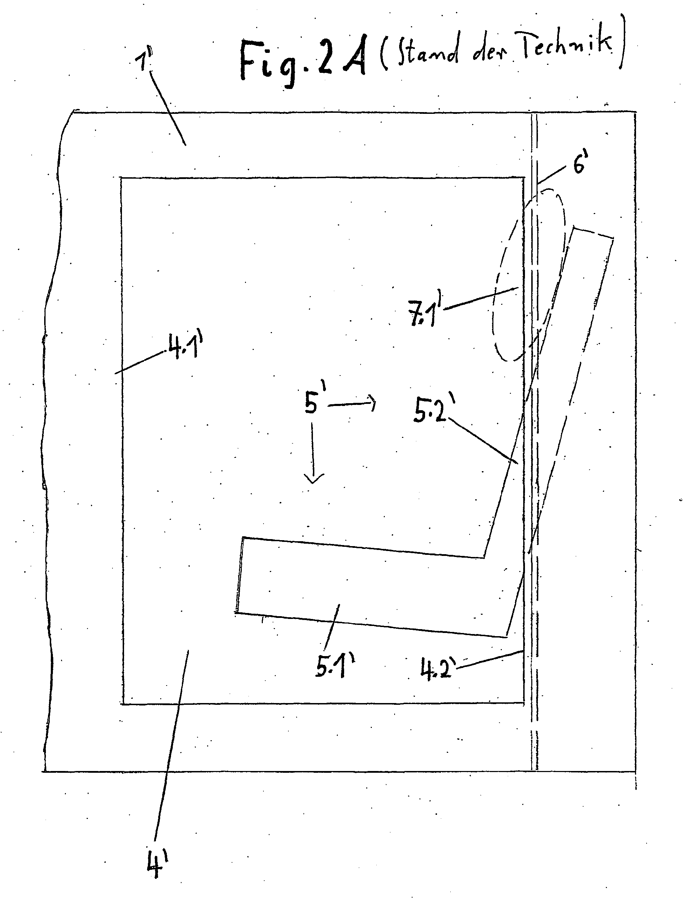

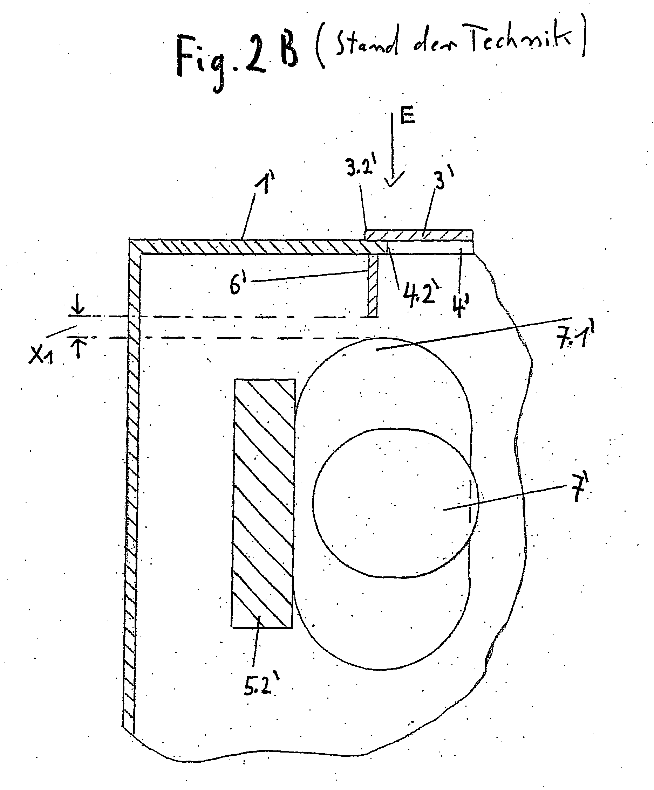

Die Figuren 2 A und 2 B zeigen die Ausgestaltung eines Fahrzeugs, das dem Stand der Technik entspricht, im Bereich des Türausschnitts 4' und des Fahrersitzes 5'. Die vorderen und hinteren Kanten 4.1' beziehungsweise 4.2' des Türausschnitts 4' verlaufen im wesentlichen vertikal. Der Fahrersitz 5' besitzt eine Sitzplatte 5.1' und eine schräg aufwärts gerichtete Rückenlehne 5.2'. Die hintere Kante 4.2' des Türausschnitts schneidet die Rückenlehne 5.2' des Fahrersitzes 5'. An der Innenseite der Seitenwand 1' ist in unmittelbarer Nähe der hinteren Kante 4.2' des Türausschnitts 4' eine parallel zu dieser Kante 4.2' verlaufende, nach innen ragende Verstärkungsrippe 6' angeordnet. Fig. 2 B ist zu entnehmen, dass der Schulterbereich 7.1' einer auf dem Fahrersitz 5' sitzenden Person 7' dieser Verstärkungsrippe 6' mit dem relativ geringen Abstand X₁ gegenüberliegt. Der Schulterbereich 7.1' ist in Fig. 2 A gestrichelt angedeutet. Diese Anordnung hat zur Folge, dass bei einer seitlich neben dem Fahrzeug stattfindenden Explosion, die auf die Seitenwand 1' und die Tür 3' einen Explosionsdruck E ausübt, eine gewisse Einbeulung der Seitenwand 1' auftritt und die Verstärkungsrippe 6' nach Durchlaufen der kleinen Strecke X₁ auf den Schulterbereich 7.1' auftrifft, so dass erhebliche Verletzungen entstehen.

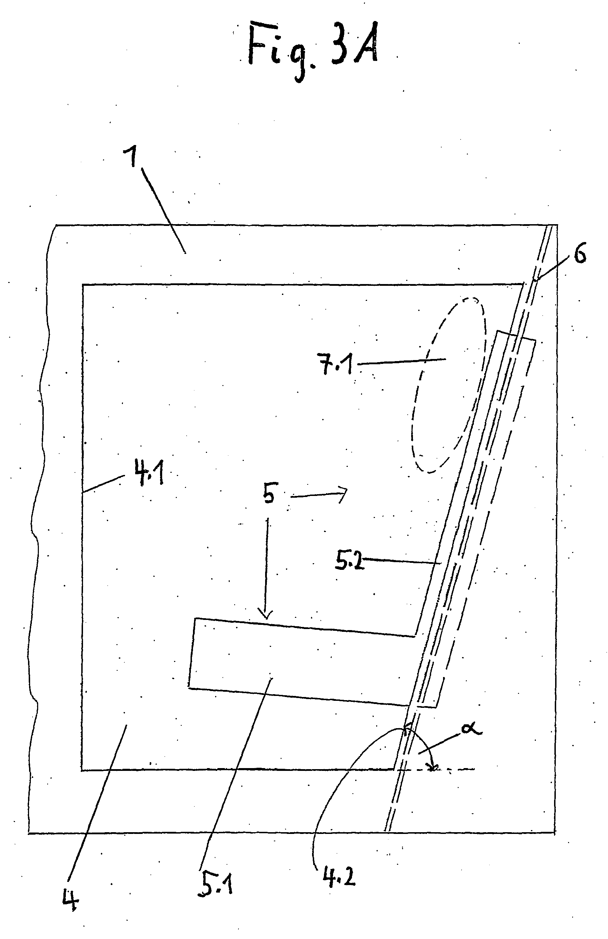

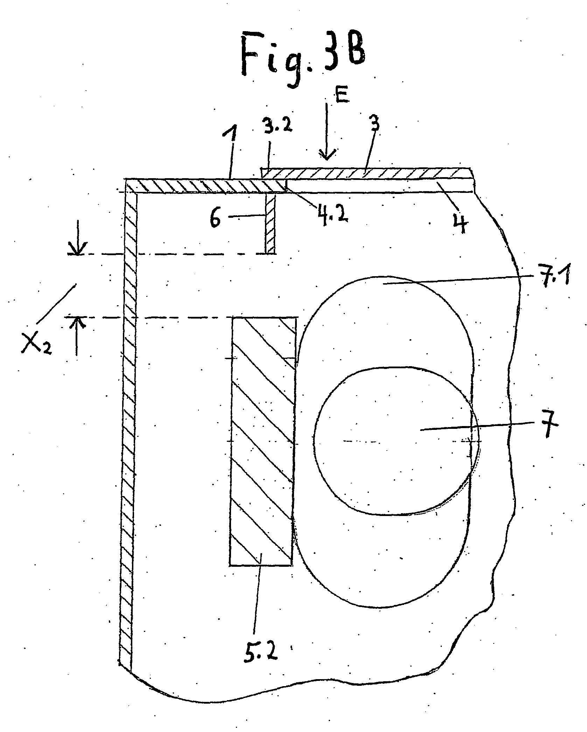

Bei der Ausführung des Fahrzeugs nach den Figuren 3 A und 3 B ist der Türausschnitt 4 in der Seitenwand 1 so ausgestaltet, dass wohl die vordere Kante 4.1 vertikal verläuft, die hintere Kante 4.2 dagegen unter einem Winkel α zur Vertikalen nach hinten ansteigend verläuft, und zwar parallel zur Richtung der Rückenlehne 5.2 des Fahrersitzes 5. Damit verläuft die parallel zur hinteren Kante 4.2 geführte Verstärkungsrippe 6 ebenfalls parallel zur Rükkenlebne 5.2. Die Anordnung ist derartig, dass in allen Positionen des Fahrersitzes 5 beziehungsweise der Sitzplatte 5.1 in Fahrzeug-Längsrichtung die Verstärkungsrippe 6 nicht in den Schulterbereich 7.1 der auf dem Fahrersitz 5 sitzenden Person 7 gerät, sondern neben oder hinter der Rückenlehne 5.2 verläuft. Wie den Figuren 3 A und 1 zu entnehmen, kann der spitze Winkel α, unter dem die hintere Kante 4.2 des Türausschnitts 4 von unten nach oben und nach hinten geneigt verläuft, zwischen 70° und 80° liegen.

Wie Fig. 3 B zu entnehmen, ist der Abstand X₂ zwischen der Verstärkungsrippe 6 und der Rückenlehne 5.2 deutlich größer als der Abstand X₁ zwischen der Verstärkungsrippe 6' und dem Schulterbereich 7.1' gemäß der Ausführung nach Fig. 2 A und 2 B.

Bei einer Explosion seitlich neben dem Fahrzeug wirkt wiederum der Explosionsdruck E auf die Tür 3 und die Seitenwand 1. Wenn es zu einer Einbeulung kommt, trifft die Verstärkungsrippe 6 einerseits nicht mehr auf den Schulterbereich 7.1, sondern auf die Rückenlehne 5.2 und andererseits ist der Abstand X₂, nach dem die Verstärkungsrippe 6 die Rückenlehne 5.2 erreicht, größer als der Abstand X₁, so dass die Verstärkungsrippe nicht oder mit erheblich reduzierter Geschwindigkeit auftrifft.

Es wird also bei gleichem Abstand der Person 7 zur Seitenwand 1 der Beulraum vergrößert und nicht die Person, sondern die Rückenlehne getroffen.

## Patentansprüche

1. Gegen äußere Explosionseinwirkung geschütztes, insbesondere militärisches Fahrzeug mit einem auf einem Fahrwerk (2) angeordneten Fahrzeuggehäuse, das in mindestens einer Seitenwand mindestens eine Ein-/Ausstiegstür (3) aufweist, die in einem Türausschnitt der Seitenwand angeordnet ist, wobei der Türflügel an der vorderen Kante des Türausschnitts angelenkt ist und an der Innenseite der Seitenwand parallel und in unmittelbarer Nähe zu der das Türschloß enthaltenden hinteren Kante (4.2) des Türausschnitts eine nach innen ragende Verstärkungsrippe (6) angeordnet ist und im Fahrzeuggehäuse im Bereich des Türausschnitts ein Fahrersitz (5) mit Sitzplatte und Rükkenlehne (5.2) angeordnet ist, **dadurch gekennzeichnet, dass** die das Türschloß enthaltende Kante (4.2) des Türausschnitts (4) so geführt ist, dass sie im wesentlichen parallel zur Aufwärtsrichtung der Rückenlehne (5.2) des Fahrersitzes (5) verläuft und die parallel zu dieser Kante (4.2) verlaufende Verstärkungsrippe (6) in allen Positionen des Fahrersitzes (5) in Fahrzeug-Längsrichtung unmittelbar neben der Rückenlehne (5.2), oder hinter der Rückenlehne, verläuft.

2. Fahrzeug nach Anspruch 1, **dadurch gekennzeichnet, dass** die Richtung der hinteren Kante (4.2) des Türausschnitts (4) unter einem vorgegebenen spitzen Winkel (α) von unten nach oben und nach hinten geneigt verläuft, wobei dieser Winkel (α) im wesentlichen einer vorgegebenen Winkelstellung der Rückenlehne (5.2) des Fahrersitzes (5) entspricht.

3. Fahrzeug nach Anspruch 2, **dadurch gekennzeichnet, dass** der vorgegebene spitze Winkel (α) zwischen 70 und 80° liegt.

## Claims

1. Vehicle, particularly a military vehicle, protected against the effect of an external explosion, having a vehicle housing, which is disposed on a chassis (2) and in at least one side wall has at least one entry/exit door (3) that is disposed in a door cutout of the side wall, wherein the door leaf is coupled to the front edge of the door cutout and on the inside of the side wall an inwardly projecting reinforcing rib (6) is disposed parallel to, and in the immediate vicinity of, the rear edge (4.2) of the door cutout containing the door lock and a driver seat (5) comprising a seat plate and back rest (5.2) is disposed in the vehicle housing in the region of the door cutout, **characterized in that** the edge (4.2) of the door cutout (4) containing the door lock runs in such a way that it extends substantially parallel to the upward direction of the back rest (5.2) of the driver seat (5) and the reinforcing rib (6) running parallel to said edge (4.2) in every position of the driver seat (5) extends in vehicle longitudinal direction immediately alongside the back rest (5.2), or behind the back rest.

2. Vehicle according to claim 1, **characterized in that** the direction of the rear edge (4.2) of the door cutout (4) extends at a defined acute angle (α) from the bottom up and inclined towards the rear, wherein said angle (α) corresponds substantially to a defined angular position of the back rest (5.2) of the driver seat (5).

3. Vehicle according to claim 2, **characterized in that** the defined acute angle (α) is between 70 and 80°.

## Revendications

1. Véhicule protégé contre les effets externes d'explosion, en particulier véhicule militaire, comprenant une caisse de véhicule disposée sur un châssis (2), qui présente dans au moins une paroi latérale au moins une porte d'entrée/sortie (3), laquelle est disposée dans une ouverture de porte de la paroi latérale, le battant de porte étant articulé sur l'arête avant de l'ouverture de porte et une nervure de renforcement (6) débordant vers l'intérieur étant disposée sur le côté intérieur de la paroi latérale parallèlement et à proximité immédiate de l'arête (4.2) arrière, incluant la serrure de porte, de l'ouverture de porte et un siège conducteur (5) avec plaque d'assise et dossier (5.2) étant disposé dans la caisse du véhicule dans la zone de l'ouverture de porte, **caractérisé en ce que** l'arête (4.2), contenant la serrure de porte, de l'ouverture de porte (4) est guidée de telle sorte qu'elle s'étend sensiblement parallèlement à la direction ascendante du dossier (5.2) du siège conducteur (5) et la nervure de renforcement (6) agencée parallèlement à cette arête (4.2) s'étend dans toutes les positions du siège conducteur (5) dans le sens longitudinal du véhicule directement à côté du dossier (5.2), ou derrière le dossier.

2. Véhicule selon la revendication 1, **caractérisé en ce que** la direction de l'arête (4.2) arrière de l'ouverture de porte (4) s'étend de façon inclinée selon un angle (α) aigu prédéfini du bas vers le haut et vers l'arrière, cet angle (α) correspondant sensiblement à une position d'angle prédéfinie du dossier (5.2) du siège conducteur (5).

3. Véhicule selon la revendication 2, **caractérisé en ce que** l'angle (α) aigu prédéfini se situe entre 70 et 80°.
